# EUROPÄISCHE PATENTANMELDUNG

(11) **EP 1 195 859 A1**
(43) Veröffentlichungstag der Anmeldung: **10.04.2002**
(21) Anmeldenummer: 01122402.9
(22) Anmeldetag: 19.09.2001
(51) Int. Cl.: H01R 31/06, B60D 1/64

(54) **Steckverbindungsadapter**

(30) Priorität: 23.09.2000 DE 20016685 U
(71) Anmelder: Sperr, Dieter, 61130 Nidderau-Ostheim (DE)
(72) Erfinder: Sperr, Dieter, 61130 Nidderau-Ostheim (DE)
(74) Vertreter: Wolf, Günter, Dipl.-Ing.

(57) **Zusammenfassung**

Die Erfindung betrifft einen Steckverbindungsadapter zur elektrischen Verkopplung eines Bordnetzes (20) eines Kraftfahrzeuges mit einem Bordnetz (22) eines Anhängers, wobei das Bordnetz (20) des Kraftfahrzeuges einen dreizehnpoligen Anschlußstecker (21) und das Bordnetz (22) des Anhängers einen siebenpoligen Anschlußstecker (23) aufweist, die unter Zwischenschaltung eines Adapters (24) miteinander verbindbar sind, wobei der Adapter (24) sieben anhängerseitige Kontakte (26) aufweist, die über Strompfade (25) mit sieben der dreizehn kraftfahrzeugseitigen Kontakte (27, 28) verbunden sind. Nach der Erfindung ist vorgesehen, dass innerhalb des Adapter (24) einer der Strompfade (25) elektrisch mit einem der restlichen sechs freien fahrzeugseitigen Kontakte (27) des Adapters (24) verbunden ist.

## Beschreibung

Die Erfindung betrifft einen Steckverbindungsadapter zur elektrischen Verkopplung eines Bordnetzes eines Kraftfahrzeuges mit einem Bordnetz eines Anhängers gemäß dem Oberbegriff des Anspruchs 1.

Derartige Steckverbindungsadapter zur elektrischen Verbindung von Kraftfahrzeugen mit Steckdosen nach DIN ISO 11446 mit Steckdosen nach DIN ISO 1724 für Anhänger sind hinlänglich bekannt und in Benutzung, so daß es diesbezüglich an sich keines druckschriftlichen Nachweises bedarf. Verwiesen sei aber beispielsweise auf die DE 296 13 311 U1.

Mit der Einführung einer mehr als 7-poligen elektrischen Steckverbindung zwischen Zugfahrzeug und Anhänger, bspw. nach DIN ISO 11446 für 12V-Bordnetze, ergeben sich zunehmend Probleme für den Bereich der Sicherstellung der Vorgaben für die gesetzlich vorgegebenen Bauvorschriften (bspw. Blinkerüberwachung, § 54 Satz 2 StVZO und ECE-R 48, Ziffer 6.5.8 und 2.18). Dies betrifft insbesondere die Kraftfahrzeuge, die mit 13-poligen Steckdosen nach der neuen DIN ISO 11446 ausgerüstet sind, wenn diese mit Anhängern verbunden werden sollen, die noch nach der weiter bestehenden DIN ISO 1724 mit 7-poligen Steckern ausgerüstet sind und auch weiterhin mit solchen 7-poligen Steckern normgerecht und insoweit den Vorschriften entsprechend hergestellt und nach wie vor in Verkehr gebracht werden dürfen. Problem ist dabei die Erkennung, und zwar die elektrische Erkennung, ob ein Anhänger mitgeführt wird oder nicht. Normgemäß sollte über einen Kontakt eine sogenannte Masserückführung zur Steckdose am Kraftfahrzeug erfolgen, was aber aus den verschiedensten Gründen nicht praktiziert wird oder gar unmöglich ist.

Da per Gesetzgebung keine Nachrüstauflagen bestehen, sind ca. 90% der im Verkehr befindlichen Anhänger mit einem 7-poligen Stecker nach DIN ISO 1724 ausgerüstet, der allerdings die mit DIN ISO 11446 geforderte Masserückführung nicht aufweist und auch gar nicht leisten kann.

Bei 13-poligen Steckverbindungen (also bei Verbindungen mit beidseitig 13-poligen Steckern) machen die Kraftfahrzeughersteller zur Erfüllung der gesetztlich geforderten Funktionen davon Gebrauch, den Kontakt Nr. 12 eines 13-poligen Steckers für die sichere Erkennung zu nutzen, ob ein Anhänger nach mechanischer Ankopplung auch "elektrisch vorhanden" ist. Um nun die elektrischen Bordnetze mit nicht kompatiblen Steckverbindungen im Alltagsgebrauch auf einfache Weise miteinander verbinden zu können, werden die eingangs erwähnten Adapter verwendet. Da sich an 7-poligen Steckverbindungen nun aber kein achter Kontakt für die Masserückführung zur Anhängererkennung realisieren läßt, ergeben sich in der Praxis zunehmend Fahrzeuggespanne, die nicht den Vorschriften entsprechen und somit letztlich eine Verkehrsgefährdung darstellen.

Der Erfindung liegt demgemäß die Aufgabe zugrunde, den für 7 auf 13-polige Anschlüsse per se erforderlichen Adapter auf einfache Weise dahingehend auszubilden und zu verbessern, daß eine Masserückführung bei anhängerseitigem 7-poligen Steckanschluß zur 13-poligen Anschlußseite des Adapters gewährleistet ist.

Diese Aufgabe ist mit einem Steckverbindungsadapter der eingangs geannten Art nach der Neuerung durch die im Kennzeichen des Anspruchs 1 genannten Merkmale gelöst.

Der Erfindung liegt mithin die Idee zugrunde, einen der sieben mit elektrischem Potential belegten Strompfade zu nutzen, und zwar vorzugsweise den, der ohnehin der Masserückführung der anhängerseitigen Verbraucher dient, um am zugfahrzeugseitig vorhandenen "Anhängererkennungs"-Kontakt (in der Regel, wie erwähnt, Kontakt Nr. 12) ein Signal bereitstellen zu können.

Der aus der weiter abliegenden EP 0 865 121 A1 bekannte, ein ähnliches Schaltbild aufweisende für EDV- und Telefonanlagen vorgesehene Steckadapter zum Verbinden eines vierpoligen mit einem achtpoligen Steckverbinder nach der sogenannten RJ45-Norm weist diesen Aufbau im übrigen nur auf, da bei längeren Verbindungen zwischen den einzelnen Kontakten reflektierte Signale die Informationsübertragung stören würden. Dort geht es also ausschhließlich darum, möglichst kurze Verbindungswege bereitstellen zu können. Diese Schaltung im Zusammenhang mit einer Anhängererkennung zu benutzen, liegt also weder auf der Hand noch gibt die Offenbarung der EP 0 865 121 A1, die der Fachmann beim genannten Problem überhaupt nicht berücksichtigen würde, einen zielführenden Hinweis.

Der erfindungsgemäße Steckverbindungsadapter sowie seine an der DIN-Norm orientierte vorteilhafte Weiterbildung werden nachfolgend anhand der zeichnerischen Darstellung eines bevorzugten Ausführungsbeispiels näher erläutert.

Orientiert an der gebräuchlichen Nummerierung der Kontakte 1 bis 7 bei 7-poligen und 1 bis 13 bei 13-poligen Anschlüssen und deren üblichen Belegung kommen konkret für die erfindungsgemäße Kontaktverbindung im Adapter die Verbindung des Strompfades zum Kontakt Nr. 3 zum kraftfahrzeugseitigen Kontakt Nr. 12 in Betracht, was in der stark schematischen Darstellung verdeutlicht ist, in der im übrigen das Bordnetz 20 des Kraftfahrzeugs einen 13-poligen Anschlußstecker 21 und das Bordnetz 22 des Anhängers einen 7-poligen Anschlußstecker 23 aufweist, die unter Zwischenschaltung des 13/7-polig ausgebildeten Adapters 24, der nur gestrichelt angedeutet ist, miteinander verbindbar sind.

Einer der Strompfade, die die sieben anhängerseitigen Kontakte 26 mit den entsprechenden zugfahrzeugseitigen Kontakten 27, 28 des Adapters 24 verbinden, nämlich der die Kontakte Nr. 3 des Adapters verbindende Strompfad 25, ist, wie dargestellt, elektrisch mit einem der restlichen sechs freien Kontakte 27 der insgesamt zugfahrzeugseitigen dreizehn Kontakte des Adapters 24 verbunden, d.h. mit dem Kontakt Nr. 12.

Im Moment der Herstellung der Steckverbindung unter Zwischenschaltung des erfindungsgemäßen Adapters 24 erhält also die Fahrzeugelektronik E vom anhängerseitigen Kontakt Nr. 3 (der der Masserückführung der anhängerseitigen Verbraucher dient) via Strompfad 25, Verbindungsleitung 29 und Kontakt Nr. 12 das gewünschte Erkennungssignal, dass der Anhänger elektrisch vorhanden ist und weiß damit, dass zusätzlich zu den Verbrauchern (in der Darstellung nicht verdeutlicht) des Kraftfahrzeuges auch die des Anhängers zu überwachen bzw. zu steuern sind.

### Bezugszeichenliste

- 20: Bordnetz (Kraftfahrzeug)
- 21: Anschlußstecker (Kraftfahrzeug)
- 22: Bordnetz (Anhänger)
- 23: Anschlußstecker (Anhänger)
- 24: Adapter
- 25: Strompfade
- 26: Kontakte (anhängerseitig)
- 27: Kontakte (fahrzeugseitig - frei)
- 28: Kontakte (fahrzeugseitig - belegt)
- 29: Verbindungsleitung

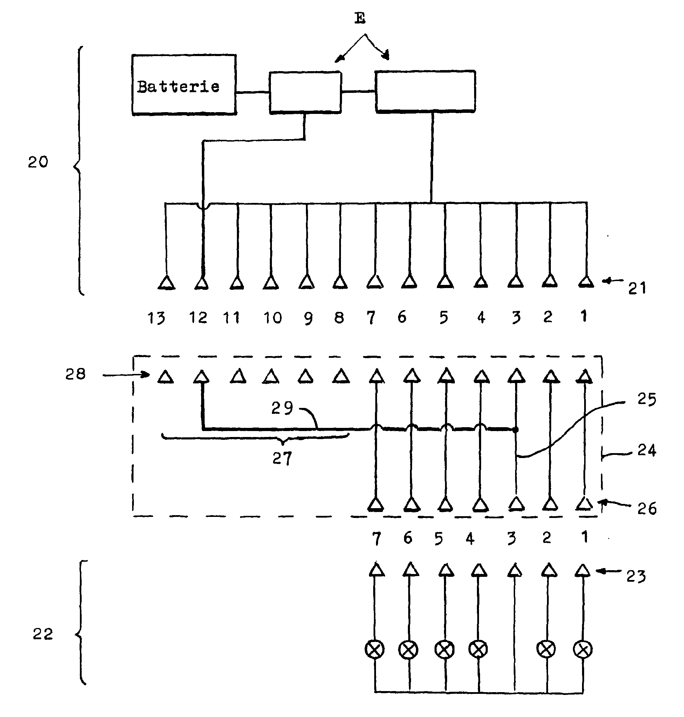

## Patentansprüche

1. Steckverbindungsadapter zur elektrischen Verkopplung eines Bordnetzes (20) eines Kraftfahrzeuges mit einem Bordnetz (22) eines Anhängers, wobei das Bordnetz (20) des Kraftfahrzeuges einen dreizehnpoligen Anschlußstecker (21) und das Bordnetz (22) des Anhängers einen siebenpoligen Anschlußstecker (23) aufweist, die unter Zwischenschaltung eines Adapters (24) miteinander verbindbar sind, wobei der Adapter (24) sieben anhängerseitige Kontakte (26) aufweist, die über Strompfade (25) mit sieben der dreizehn kraftfahrzeugseitigen Kontakte (27, 28) verbunden sind,
**dadurch gekennzeichnet,**
**dass** innerhalb des Adapter (24) einer der Strompfade (25) elektrisch mit einem der restlichen sechs freien fahrzeugseitigen Kontakte (27) des Adapters (24) verbunden ist.

2. Steckverbindungsadapter nach Anspuch 1,
**dadurch gekennzeichnet,**
**dass** der freie fahrzeugseitige Kontakt (27) über eine Verbindungsleitung (29) dem der anhängerseitigen Masserückführung dienenden Strompfad (25) verbunden ist.
